(19) **Europäisches Patentamt / European Patent Office / Office européen des brevets**

(11) **EP 4 456 582 A1**

(12) # EUROPEAN PATENT APPLICATION
published in accordance with Art. 153(4) EPC

(43) Date of publication:
**30.10.2024 Bulletin 2024/44**

(21) Application number: **23765786.1**

(22) Date of filing: **22.02.2023**

(51) International Patent Classification (IPC):
**H04W 12/12** (2021.01)  **H04W 64/00** (2009.01)

(52) Cooperative Patent Classification (CPC):
**H04B 17/318; H04W 4/02; H04W 12/12;
H04W 12/122; H04W 12/63; H04W 24/08;
H04W 64/00**

(86) International application number:
**PCT/CN2023/077573**

(87) International publication number:
**WO 2023/169208 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.03.2022 CN 202210232230**

(71) Applicant: **Huawei Technologies Co., Ltd.
Shenzhen, Guangdong 518129 (CN)**

(72) Inventor: **HU, Xiaofeng
Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **METHOD FOR POSITIONING PSEUDO BASE STATION, AND RELATED APPARATUS**

(57)  Embodiments of this application provide a false base station positioning method and a related apparatus, to implement accurate positioning of a false base station. Specifically, the method includes: A positioning apparatus obtains K pieces of measurement data for a target false base station and location information of user equipments that report the K pieces of measurement data, where each piece of measurement data includes an identifier of the target false base station and a reference signal received power of the target false base station, and K≥2. The positioning apparatus determines location information of the target false base station based on the location information of the user equipment and the reference signal received power of the target false base station.

A positioning apparatus obtains K pieces of measurement data for a target false base station and location information of user equipments that report the K pieces of measurement data, where each piece of measurement data includes an identifier of the target false base station and a reference signal received power of the target false base station, and K≥2 — 401

The positioning apparatus determines location information of the target false base station based on the location information of the user equipment and the reference signal received power of the target false base station — 402

FIG. 4

EP 4 456 582 A1

## Description

This application claims priority to Chinese Patent Application No. CN202210232230.5, filed with the China National Intellectual Property Administration on March 9, 2022 and entitled "FALSE BASE STATION POSITIONING METHOD AND RELATED APPARATUS", which is incorporated herein by reference in its entirety.

## TECHNICAL FIELD

This application relates to the communication field, and in particular, to a false base station positioning method and a related apparatus.

## BACKGROUND

A false base station attacks a user equipment based on protocol vulnerabilities of a 2nd generation (2nd generation, 2G) mobile communication system. Because a single authentication vulnerability exists in 2G, when connecting to a base station, the user equipment preferentially selects a base station with high level signal strength for connection. If a signal of the false base station is greater than a signal of a normal authorized base station, and a location area code of the false base station is different from a location area code of the normal base station, the user equipment initiates a location update procedure and accesses the false base station, and the false base station sends a spam fraud SMS message to a user. In recent years, law-breakers have used false base station equipments and eavesdropping equipments to commit illegal acts, which poses a serious threat to a communication order, people's lives and property, and even a social order in China.

The false base station not only endangers people's property security, but also causes severe network interference to operator networks, and consequently trusted and secure normal communication of wireless networks is affected. The 3rd generation partnership project (3rd generation partnership project, 3GPP) proposes a security architecture for a 5th generation mobile communication technology (5th generation mobile communication technology, 5G) system. The security architecture mainly uses various authentication mechanisms to ensure a secure and trusted network, and a solution for combating the false base station proposed in the security architecture is network-based and user equipment (user equipment, UE)-assisted false base station detection. The "network-based and UE-assisted" means that the user equipment UE is responsible for collecting information, and reporting information such as a cell identity (cell identity, CI) and signal strength of a neighboring base station to a network by using a measurement report; and the network comprehensively analyzes all data based on related data such as a network topology and configuration information, to determine whether a false base station exists in an area. In addition, a location of the false base station is determined by using positioning technologies such as a global positioning system (global positioning system, GPS) and triangulation. Therefore, the false base station is completely combated.

However, currently, only an approximate range in which the false base station is located can be determined by using these technologies, and positioning accuracy is not high enough. Therefore, a technical solution that can be used to implement accurate positioning of the false base station is urgently needed.

## SUMMARY

Embodiments of this application provide a false base station positioning method and a related apparatus, to implement accurate positioning of a false base station.

According to a first aspect, this application provides a false base station positioning method. Specifically, the method includes: A positioning apparatus obtains K pieces of measurement data for a target false base station and location information of user equipments that report the K pieces of measurement data, where each piece of measurement data includes an identifier of the target false base station and a reference signal received power of the target false base station, and K≥2. The positioning apparatus determines location information of the target false base station based on the location information of the user equipment and the reference signal received power of the target false base station.

In the technical solution provided in this application, the positioning apparatus may receive a plurality of pieces of measurement data sent by a plurality of user equipments. The plurality of pieces of measurement data may indicate information about a plurality of false base stations. Therefore, when positioning one of the false base stations, the positioning apparatus may obtain the measurement data for the target false base station from the plurality of pieces of measurement data, and then determine the location information of the target false base station based on the measurement data for the target false base station.

In the technical solution provided in this application, the positioning apparatus determines the location information of the false base station based on location information of the plurality of user equipments. This increases accuracy of the location information of the target false base station.

Optionally, that the positioning apparatus determines location information of the target false base station based on the location information of the user equipment and the reference signal received power of the target false base station may use the following technical solution:

The positioning apparatus determines a location target optimization function of the target false base station based on a propagation model path loss formula, the location information of the user equipment, and the reference signal received power of the target false base station, to obtain the location information of the target false base station, where the propagation model path loss formula is: pathLoss = p + 10 $*$ m $*$ log(d); and

the target optimization function is:

$$(a, b) = \arg\min_{(a,b)} \left( \frac{1}{2} * \sum_{i=1}^{M} \left[ A + \frac{n}{2} * \log((x_i - a)^2 + (y_i - b)^2)) - \text{FalseBtsRsrp}_i \right]^2 \right).$$

p and A indicate a transmit power of the target false base station, d indicates a propagation distance between the target false base station and the user equipment, M indicates a quantity of user equipments that report the K pieces of measurement data, (a, b) indicates the location information of the target false base station, $(x_i, y_i)$ indicates location information of an $i^{th}$ user equipment, FalseBtsRsrp$_i$ indicates a quantization level value that is of the reference signal received power of the target false base station and that is measured by the $i^{th}$ user equipment, and $\frac{n}{2}$ and 10 $*$ m indicate an attenuation factor. It may be understood that a value of m may be set to be greater than or equal to 4. In this way, the location information of the target false base station is positioned based on location information of a plurality of user equipments and the reference signal received power of the target false base station measured by the plurality of user equipments, so that accuracy of the location information of the target false base station can be improved.

Optionally, in this embodiment, a specific process in which the positioning apparatus determines the location target priority function of the target false base station based on the propagation model path loss formula, the location information of the user equipment, and the reference signal received power of the target false base station may be as follows: The positioning apparatus determines a predicted value of the quantization level value based on the transmit power of the target false base station. The positioning apparatus obtains a residual function based on the quantization level value measured by the user equipment and the predicted value. The positioning apparatus performs least square-based processing on the residual function and the propagation model path loss formula to obtain the target optimization function.

A formula for calculating the predicted value is: $\text{RSRP\_predict} = A + \frac{n}{2} * \log((x-a)^2 + (y-b)^2)$; and

the residual function is: $\text{error} = A + \frac{n}{2} * \log((x-a)^2 + (y-b)^2)) - \text{FalseBtsRsrp}$.

RSRP_predict indicates the predicted value, $\frac{n}{2}$ indicates the attenuation factor, A indicates the transmit power of the target false base station, (x, y) indicates the location information of the user equipment, (a, b) indicates the location information of the target false base station, error indicates a difference between the level value and the predicted value, and FalseBtsRsrp indicates a quantization level value that is of the reference signal received power of the target false base station and that is measured by the user equipment.

Optionally, in this embodiment, the location information of the user equipment is determined by using a minimization of drive tests positioning manner that is based on a global positioning system GPS; or the location information of the user equipment is determined by using a triangular positioning manner or a cell identity enhanced positioning manner. In this embodiment, the location information of the user equipment may be obtained through positioning by the positioning apparatus based on measurement information of a serving base station accessed by the user equipment, or may be obtained through positioning by a positioning server corresponding to the user equipment and sending related positioning information to the positioning apparatus. This is not specifically described herein again. If the location information of the user equipment is obtained by the positioning apparatus through positioning based on the measurement information of the serving base station accessed by the user equipment, the K pieces of measurement data may further include location information of the serving base station accessed by the user equipments that report the K pieces of measurement data, and a timing advance for communication between the serving base station and the user equipment. Then, the positioning apparatus determines the location information of the user equipment based on the location information of the serving base station and/or the timing advance. In this embodiment, the location information of the serving base station may be directly obtained from an engineering parameter of the serving base station. It may be understood that the engineering parameter of the serving base station indicates deployment information of the serving base station in an actual live network, for example, information such as the location information of the serving base station, a height and a tilt angle of the serving base station, an azimuth of the serving base station, and a cell name and a cell location that correspond to the serving base station.

According to a second aspect, this application provides a false base station positioning method. Specifically, the method includes: A positioning apparatus obtains K pieces of measurement data for a target false base station, where each piece of measurement data includes an identifier of the target false base station, a reference signal received power of the target false base station, location information of a serving base station accessed by user equipments that report the K pieces of measurement data, and a timing advance between the serving base station and the user equipment, and $K \geq 2$. The positioning apparatus uses measurement data with a same reference signal received power as one dataset to obtain M datasets, where M is a positive integer. For each dataset, the positioning apparatus obtains M locations through calculation based on measurement data included in the dataset. The positioning apparatus determines location information of the target false base station based on the M locations.

In the technical solution provided in this application, the positioning apparatus may receive a plurality of pieces of measurement data sent by a plurality of user equipments. The plurality of pieces of measurement data may indicate information about a plurality of false base stations. Therefore, when positioning one of the false base stations, the positioning apparatus may obtain the measurement data for the target false base station from the plurality of pieces of measurement data, and then determine the location information of the target false base station based on the measurement data for the target false base station.

In the technical solution provided in this application, the positioning apparatus determines the location information of the false base station based on location information of a plurality of serving base stations. This increases accuracy of the location information of the target false base station.

Optionally, when the positioning apparatus uses the measurement data with the same reference signal received power as one dataset, the positioning apparatus may specifically use the following manner:

The positioning apparatus quantizes the reference signal received power of the target false base station in each piece of obtained measurement data to obtain a quantization level; and then uses measurement data with a same quantization level as one dataset to obtain the M datasets. In this way, reference signal received powers with a small difference may be summarized into a same dataset. This increases a data amount in the same dataset, and further improves positioning accuracy.

Optionally, a specific operation in which the positioning apparatus quantizes the reference signal received power of the target false base station in each piece of measurement data to obtain the quantization level may be as follows:

The positioning apparatus quantizes the reference signal received power of the target false base station in each piece of measurement data based on a first formula to obtain the quantization level.

The first formula is: $False\_Bts\_Quantify\_Rsrp = - 10 * quantify\_rsrp$ ; and $quantify_{rsrp} = int(- 1 * FalseBtsRsrp/10)$. FalseBtsRsrp indicates a quantization level value that is of the reference signal received power of the target false base station and that is measured by the user equipment, $quantify_{rsrp}$ indicates a value obtained by rounding the level value, and $False\_Bts\_Quantify\_Rsrp$ indicates an output quantization level.

Optionally, a specific operation in which the positioning apparatus obtains the M locations through calculation based on the measurement data included in the dataset may be as follows: For each dataset, the positioning apparatus determines, by using a time difference positioning method or a least square positioning algorithm and based on the location information of the serving base station and the timing advance that are included in the dataset, a location that is of the target false base station and that corresponds to each dataset, to obtain the M locations corresponding to the M datasets.

Optionally, a specific operation in which the positioning apparatus determines the location information of the target false base station based on the M locations may be as follows: The positioning apparatus averages the M locations to obtain the location information of the target false base station. In this way, an average value of a plurality of pieces of location information is obtained, to obtain the location information of the target false base station. This improves positioning accuracy of the target false base station.

According to a third aspect, this application provides a false base station positioning apparatus. The apparatus has a function of implementing behavior of the positioning apparatus in the first aspect. The function may be implemented by hardware, or may be implemented by hardware executing corresponding software. The hardware or the software includes one or more modules corresponding to the function.

In a possible implementation, the apparatus includes units or modules configured to perform the steps in the first aspect. For example, the apparatus includes an obtaining module, configured to obtain K pieces of measurement data for a target false base station and location information of user equipments that report the K pieces of measurement data, where each piece of measurement data includes an identifier of the target false base station and a reference signal received power of the target false base station, and K≥2; and

a processing module, configured to determine location information of the target false base station based on the location information of the user equipment and the reference signal received power of the target false base station.

Optionally, the apparatus further includes a storage module, configured to store program instructions and data that are necessary for the positioning apparatus.

In a possible implementation, the apparatus includes a processor and a transceiver. The processor is configured to support the positioning apparatus in performing a corresponding function in the method provided in the first aspect. The transceiver is configured to: indicate communication between the positioning apparatus and a user equipment, send the location information of the target false base station in the foregoing method to the user equipment, and receive measurement data sent by the user equipment. Optionally, the apparatus may further include a memory. The memory is configured to be coupled to the processor, and the memory stores program instructions and data that are necessary for the positioning apparatus.

In a possible implementation, when the apparatus is a chip in the positioning apparatus, the chip includes a processing module and a transceiver module, and the processing module may be, for example, a processor. The transceiver module herein may be, for example, an input/output interface, a pin, or a circuit on the chip, and transmits obtained measurement data and location information of a user equipment to another chip or module coupled to the chip. The processor is configured to determine location information of a target false base station based on the location information of the user equipment and a reference signal received power of the target false base station. The processing module may execute computer-executable instructions stored in a storage unit, to support the positioning apparatus in performing the method provided in the first aspect. Optionally, the storage unit may be a storage unit in the chip, for example, a register or a cache. The storage unit may alternatively be a storage unit outside the chip, for example, a read-only memory (read-only memory, ROM), another type of static storage device that can store static information and instructions, or a random access memory (random access memory, RAM).

In a possible implementation, the apparatus includes a processor, a baseband circuit, a radio frequency circuit, and an antenna. The processor is configured to control some functions of each circuit. The baseband circuit is configured to include a message of location information of a target false base station. After the radio frequency circuit performs analog conversion, filtering, amplification, up-conversion, and the like on the message, the message is sent to the user equipment via the antenna. Optionally, the apparatus further includes a memory. The memory stores program instructions and data that are necessary for the positioning apparatus.

In a possible implementation, the apparatus includes a communication interface and a logic circuit. The communication interface is configured to obtain K pieces of measurement data for a target false base station and location information of user equipments that report the K pieces of measurement data, where each piece of measurement data includes an identifier of the target false base station and a reference signal received power of the target false base station, and K≥2. The logic circuit is configured to determine location information of the target false base station based on the location information of the user equipment and the reference signal received power of the target false base station.

The processor mentioned above may be a general-purpose central processing unit (Central Processing Unit, CPU), a microprocessor, an application-specific integrated circuit (application-specific integrated circuit, ASIC), or one or more integrated circuits configured to control program execution of the data transmission method in the foregoing aspects.

According to a fourth aspect, this application provides a false base station positioning apparatus. The apparatus has a function of implementing behavior of the positioning apparatus in the second aspect. The function may be implemented by hardware, or may be implemented by hardware executing corresponding software. The hardware or the software includes one or more modules corresponding to the function.

In a possible implementation, the apparatus includes units or modules configured to perform the steps in the second aspect. For example, the apparatus includes: an obtaining module, configured to obtain K pieces of measurement data for a target false base station, where each piece of measurement data includes an identifier of the target false base station, a reference signal received power of the target false base station, location information of a serving base station accessed by user equipments that report the K pieces of measurement data, and a timing advance between the serving base station and the user equipment, and K≥2; and a processing module, configured to: use measurement data with a same reference signal received power as one dataset to obtain M datasets, where M is a positive integer; for each dataset, obtain M locations through calculation based on measurement data included in the dataset; and determine location information of the target false base station based on the M locations. Optionally, the apparatus further includes a storage module, configured to store program instructions and data that are necessary for the positioning apparatus.

In a possible implementation, the apparatus includes a processor and a transceiver. The processor is configured to support the positioning apparatus in performing a corresponding function in the method provided in the second aspect. The transceiver is configured to: indicate communication between the positioning apparatus and a user equipment, send the location information of the target false base station in the foregoing method to the user equipment, and receive measurement data sent by the user equipment. Optionally, the apparatus may further include a memory. The memory is configured to be coupled to the processor, and the memory stores program instructions and data that are necessary for the positioning apparatus.

In a possible implementation, when the apparatus is a chip in the positioning apparatus, the chip includes a processing module and a transceiver module, and the processing module may be, for example, a processor. The transceiver module herein may be, for example, an input/output interface, a pin, or a circuit on the chip, and transmits obtained measurement data to another chip or module coupled to the chip. The processor is configured to: use measurement data with a same reference signal received power as one dataset to obtain M datasets; for each dataset, obtain M locations through calculation based on measurement data included in the dataset; and determine location information of a target false base station based on the M locations. The processing module may execute computer-executable instructions stored in a storage unit, to support the positioning apparatus in performing the method provided in the first aspect. Optionally, the storage unit may be a storage unit in the chip, for example, a register or a cache. The storage unit may alternatively be a storage unit outside the chip, for example, a read-only memory (read-only memory, ROM), another type of static storage device that can store static information and instructions, or a random access memory (random access memory, RAM).

In a possible implementation, the apparatus includes a processor, a baseband circuit, a radio frequency circuit, and an antenna. The processor is configured to control some functions of each circuit. The baseband circuit is configured to include a message of location information of a target false base station. After the radio frequency circuit performs analog conversion, filtering, amplification, up-conversion, and the like on the message, the message is sent to the user equipment via the antenna. Optionally, the apparatus further includes a memory. The memory stores program instructions and data that are necessary for the positioning apparatus.

In a possible implementation, the apparatus includes a communication interface and a logic circuit. The communication interface is configured to obtain K pieces of measurement data for a target false base station, where each piece of measurement data includes an identifier of the target false base station, a reference signal received power of the target false base station, location information of a serving base station accessed by user equipments that report the K pieces of measurement data, and a timing advance between the serving base station and the user equipment, and K≥2. The logic circuit is configured to: use measurement data with a same reference signal received power as one dataset to obtain M datasets; for each dataset, obtain M locations through calculation based on measurement data included in the dataset; and determine location information of the target false base station based on the M locations.

The processor mentioned above may be a general-purpose central processing unit (Central Processing Unit, CPU), a microprocessor, an application-specific integrated circuit (application-specific integrated circuit, ASIC), or one or more integrated circuits configured to control program execution of the data transmission method in the foregoing aspects.

According to a fifth aspect, an embodiment of this application provides a computer-readable storage medium. The computer storage medium stores computer instructions, and the computer instructions are used to perform the method according to any possible implementation of any one of the foregoing aspects.

According to a sixth aspect, an embodiment of this application provides a computer program product including instructions. When the computer program product runs on a computer, the computer is enabled to perform the method according to any one of the foregoing aspects.

According to a seventh aspect, this application provides a chip system. The chip system includes a processor, configured to support a positioning apparatus in implementing a function according to the foregoing aspects, for example, generating or processing data and/or information in the foregoing method. In a possible design, the chip system further includes a memory. The memory is configured to store program instructions and data that are necessary for the positioning apparatus, to implement a function according to any one of the foregoing aspects. The chip system may include a chip, or may include a chip and another discrete component.

According to an eighth aspect, an embodiment of this application provides a communication system. The system includes the positioning apparatus, the user equipment, and the serving base station according to the foregoing aspects.

**BRIEF DESCRIPTION OF DRAWINGS**

FIG. 1 is an example diagram of a false base station detection solution in a 5G system;
FIG. 2 is a diagram of an architecture of a false base station positioning system according to an embodiment of this application;
FIG. 3 is an example flowchart of a false base station positioning method according to an embodiment of this application;
FIG. 4 is a diagram of an embodiment of a false base station positioning method according to embodiments of this application;

FIG. 5a is a presentation diagram of location information of a false base station according to an embodiment of this application;

FIG. 5b is another presentation diagram of location information of a false base station according to an embodiment of this application;

FIG. 5c is another presentation diagram of location information of a false base station according to an embodiment of this application;

FIG. 6 is a diagram of another embodiment of a false base station positioning method according to embodiments of this application;

FIG. 7 is a diagram of an embodiment of a false base station positioning apparatus according to embodiments of this application;

FIG. 8 is a diagram of another embodiment of a false base station positioning apparatus according to embodiments of this application;

FIG. 9 is a diagram of another embodiment of a false base station positioning apparatus according to embodiments of this application; and

FIG. 10 is a diagram of another embodiment of a false base station positioning apparatus according to embodiments of this application.

## DESCRIPTION OF EMBODIMENTS

To make objectives, technical solutions, and advantages of this application clearer, the following describes embodiments of this application with reference to the accompanying drawings. It is clear that the described embodiments are merely some rather than all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that data used in such a way is interchangeable in a proper circumstance, so that embodiments described herein can be implemented in an order other than the order illustrated or described herein. In addition, the terms "include", "have", and any other variants are intended to cover a non-exclusive inclusion. For example, a process, method, system, product, or device that includes a series of steps or modules is not necessarily limited to those expressly listed steps or modules, but may include other steps or modules not expressly listed or inherent to the process, method, product, or device. Names or numbers of steps in this application do not mean that the steps in the method procedure need to be performed in a time/logical sequence indicated by the names or numbers. An execution sequence of the steps in the procedure that have been named or numbered may be changed based on a technical objective to be achieved, provided that same or similar technical effects can be achieved. Unit division in this application is logical division. During actual application, there may be other division. For example, a plurality of units may be combined or integrated into another system, or some features may be ignored or not performed. In addition, the displayed or discussed mutual couplings, direct couplings, or communication connections may be implemented through some interfaces. The indirect couplings or communication connections between the units may be implemented in electrical or another similar form. This is not limited in this application. In addition, units or subunits described as separate components may or may not be physically separate, may or may not be physical units, or may be distributed into a plurality of circuit units. Some or all of the units may be selected based on an actual requirement to achieve the objectives of the solutions of this application.

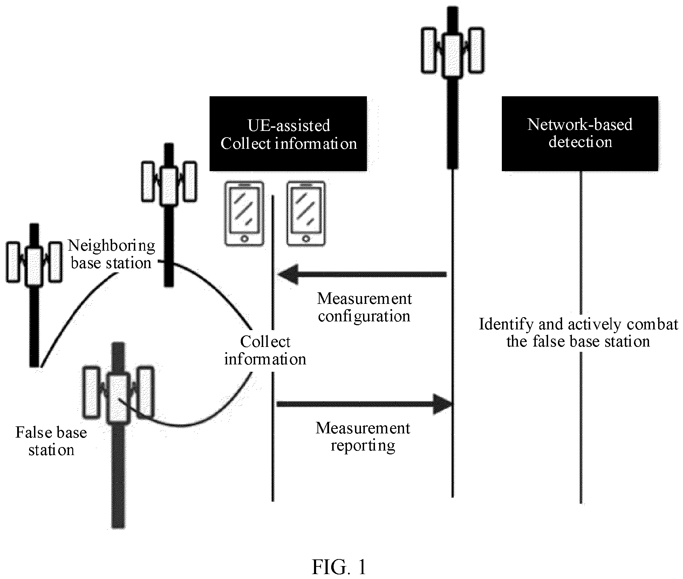

A false base station attacks a user equipment based on 2G protocol vulnerabilities. Because a single authentication vulnerability exists in 2G, when connecting to a base station, the user equipment preferentially selects a base station with high level signal strength for connection. If a signal of the false base station is greater than a signal of a normal authorized base station, and a location area code of the false base station is different from a location area code of the normal base station, the user equipment initiates a location update procedure and accesses the false base station, and the false base station sends a spam fraud SMS message to a user. In recent years, law-breakers have used false base station equipments and eavesdropping equipments to commit illegal acts, which poses a serious threat to a communication order, people's lives and property, and even a social order in China. The false base station not only endangers people's property security, but also causes severe network interference to operator networks, and consequently trusted and secure normal communication of wireless networks is affected. The 3GPP proposes a security architecture for a 5G system. The security architecture mainly uses various authentication mechanisms to ensure a secure and trusted network, and a solution for combating the false base station proposed in the security architecture is network-based and UE-assisted false base station detection. A specific operation may be shown in FIG. 1. A user equipment UE is responsible for collecting information, and reporting information such as a CI and signal strength of a neighboring base station to a network by using a measurement report; and the network comprehensively analyzes all data based on related data such as a network topology and configuration information, to determine whether a false base station exists in an area. In addition, a location of the false base station is determined by using positioning technologies such as a GPS and triangulation. Therefore, the false base station is completely combated. However, currently, only an approximate range in which the false base station is located can be determined by using these technologies, and positioning accuracy is not high enough. Therefore, a technical solution that can implement accurate positioning of the false base station is urgently needed.

To resolve this problem, an embodiment of this application provides the following technical solution: A positioning apparatus obtains K pieces of measurement data for a target false base station, where each piece of measurement data includes an identifier of the target false base station, a reference signal received power of the target false base station, location information of a serving base station accessed by user equipments that report the K pieces of measurement data, and a timing advance between the serving base station and the user equipment, and $K \geq 2$. The positioning apparatus determines location information of the user equipment based on the location information of the serving base station and/or the timing advance. The positioning apparatus determines location information of the target false base station based on the location information of the user equipment and the reference signal received power of the target false base station.

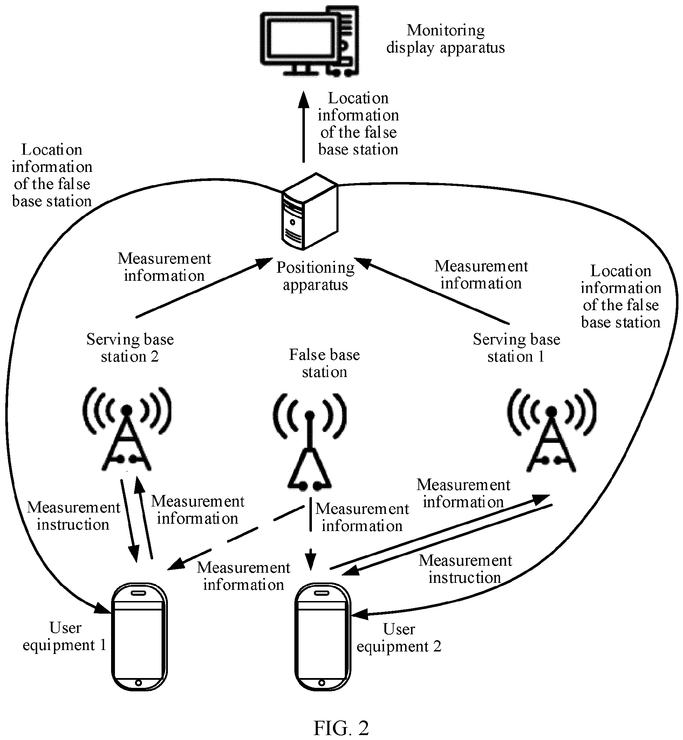

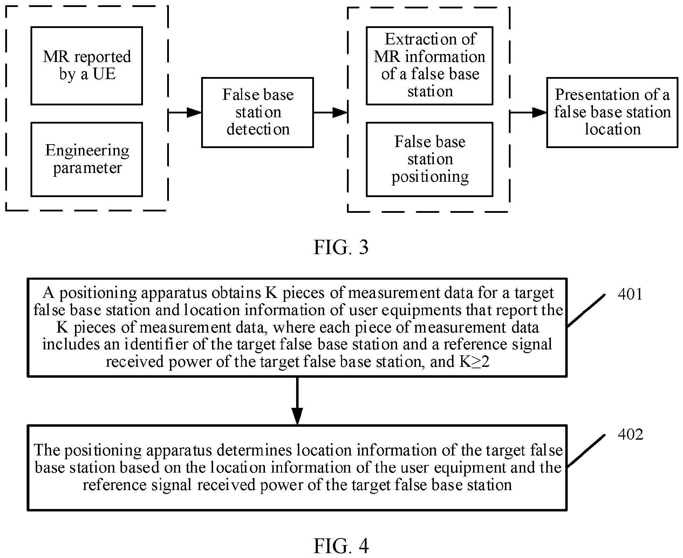

A system architecture to which this embodiment of this application is applied may be shown in FIG. 2. The system architecture includes serving base stations, a false base station, a plurality of user equipments, a positioning apparatus, and a monitoring display apparatus. A false base station positioning procedure is shown in FIG. 3. The serving base station accessed by the user equipment sends a measurement instruction (namely, a measurement configuration) to the user equipment. After receiving the test instruction, the user equipment measures the serving base station accessed by the user equipment and a neighboring base station (where in this embodiment, the neighboring base station may be an authorized base station or a false base station) to generate measurement data (where in this embodiment, the measurement data includes a measurement report (measurement report, MR)) and an engineering parameter of the serving base station accessed by the user equipment. In this embodiment, the engineering parameter of the serving base station indicates deployment information of the serving base station in an actual live network, for example, information such as location information of the serving base station, a height and a tilt angle of the serving base station, an azimuth of the serving base station, and a cell name and a cell location that correspond to the serving base station. After the measurement is completed, the user equipment sends the generated measurement data to the positioning apparatus, and then the positioning apparatus completes positioning of the false base station based on measurement data sent by the plurality of user equipments. Finally, the positioning apparatus presents location information of the false base station. It may be understood that the positioning apparatus may send the location information of the false base station to each user equipment, an operator network monitoring platform, or a law enforcement platform, so that the user equipment can avoid accessing the false base station, and the operator network monitoring platform and the law enforcement platform can accurately combat the false base station, in other words, only the false base station can be accurately combated. A specific presentation manner is not limited herein.

Before the positioning apparatus completes the positioning of the false base station based on the measurement data, the false base station positioning procedure further includes a false base station detection process based on information reported by the user equipment (in other words, the system architecture may further include a false base station detection module, the false base station detection module may be included in the positioning apparatus or may be in a device independent of the positioning apparatus, and this is not specifically limited herein). In this case, the false base station detection module may perform big data analysis based on related information of quality of service in user call data to discover the false base station. For example, if quality of service parameters of more than a preset quantity of user equipments in a same location area in a same time period are not within a preset normal range, it is determined that a false base station exists in the area in which the user equipment is located, and corresponding related information in the measurement data is marked as the false base station. In this way, the positioning apparatus may determine, based on an identifier of the false base station in the measurement data, the false base station that needs to be positioned. In this embodiment, a specific method for detecting the false base station based on the measurement data is not described herein again, provided that a function of detecting the false base station can be implemented.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5G communication system, and a future wireless communication system.

In this application, the user equipment (User Equipment, UE) may be a terminal device, an access terminal, a subscriber unit, a subscriber station, a mobile station, a remote station, a remote terminal, a mobile device, a user terminal, a terminal, a wireless communication device, a user agent, or a user apparatus. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, or a terminal device in a future evolved public land mobile network (public land mobile network, PLMN).

In this application, the serving base station may be a device configured to communicate with the user equipment, for example, may be a base transceiver station (Base Transceiver Station, BTS) in the GSM or the CDMA system, may be a NodeB (NodeB, NB) in the WCDMA system, or may be an evolved NodeB (Evolved NodeB, eNB or eNodeB) in the LTE system.

The following describes a false base station positioning method in embodiments of this application with reference to the figure. As shown in FIG. 4, an embodiment of the false base station positioning method in embodiments of this application includes the following steps.

401: A positioning apparatus obtains K pieces of measurement data for a target false base station and location information of user equipments that report the K pieces of measurement data, where each piece of measurement data includes an identifier of the target false base station and a reference signal received power of the target false base station, and K≥2.

In this embodiment, the positioning apparatus may receive a plurality of pieces of measurement data sent by a plurality of user equipments. The plurality of pieces of measurement data may indicate information about a plurality of false base stations. Therefore, when positioning one of the false base stations, the positioning apparatus may obtain the K pieces of measurement data for the target false base station from the plurality of pieces of measurement data.

In an example solution, a specific result of each piece of measurement data in the measurement data obtained by the positioning apparatus may be shown in Table 1.

**Table 1**

| Name | Meaning |
|---|---|
| x | x coordinate of a positioning result of a user equipment |
| y | y coordinate of a positioning result of a user equipment |
| LcsType | Location type used for positioning a user equipment |
| SrvSiteID | Serving cell (authorized base station) site ID |
| SrvCellID | Serving cell (authorized base station) ID |
| SrvTA_Dis | Timing advance between a serving cell and a measured terminal, where the timing advance is converted into a distance m |
| FalseBtsSiteID | False base station site ID |
| FalseBtsCellID | False base station cell ID |
| FalseBtsFreq | False base station frequency |
| FalseBtsPci | False base station PCI |
| FalseBtsRsrp | False base station cell level with a negative value of LTE [-43, -140] or NR [-30, -157] and in a unit of decibel milliwatt (dBm) |

It may be understood that the measurement data may further include other information. Details are not described herein again.

In this embodiment, the location information of the user equipment is determined by using a minimization of drive tests positioning manner that is based on a global positioning system GPS; or the location information of the user equipment is determined by using a triangular positioning manner or a cell identity enhanced positioning manner. In this embodiment, the location information of the user equipment may be obtained through positioning by the positioning apparatus based on measurement information of a serving base station accessed by the user equipment, or may be obtained through positioning by a positioning server corresponding to the user equipment and sending related positioning information to the positioning apparatus. This is not specifically described herein again. If the location information of the user equipment is obtained by the positioning apparatus through positioning based on the measurement information of the serving base station accessed by the user equipment, the K pieces of measurement data may further include location information of the serving base station accessed by the user equipments that report the K pieces of measurement data, and a timing advance for communication between the serving base station and the user equipment. Then, the positioning apparatus determines the location information of the user equipment based on the location information of the serving base station and/or the timing advance. In this embodiment, the location information of the serving base station may be directly obtained from an engineering parameter of the serving base station. It may be understood that the engineering parameter of the serving base station indicates deployment information of the serving base station in an actual live network, for example, information such as the location information of the serving base station, a height and a tilt angle of the serving base station, an azimuth of the serving base station, and a cell name and a cell location that correspond to the serving base station.

402: The positioning apparatus determines location information of the target false base station based on the location information of the user equipment and the reference signal received power of the target false base station.

In this embodiment, the positioning apparatus determines a predicted value of a quantization level value based on a transmit power of the target false base station, where a formula for calculating the predicted value is:

$$\text{RSRP\_predict} = A + \frac{n}{2} * \log((x-a)^2 + (y-b)^2)$$

Then, the positioning apparatus obtains a residual function based on the quantization level value measured by the user equipment and the predicted value, where the residual function is:

$$\text{error} = A + \frac{n}{2} * \log((x-a)^2 + (y-b)^2)) - \text{FalseBtsRsrp}$$

Finally, the positioning apparatus performs least square-based processing on the residual function and a propagation model path loss formula to obtain a target optimization function, where the propagation model path loss formula is: pathLoss = p + 10 * m * log(d).

The target optimization function is:

$$(a, b) = \arg\min_{(a,b)} \left( \frac{1}{2} * \sum_{i=1}^{M} \left[ A + \frac{n}{2} * \log((x_i - a)^2 + (y_i - b)^2)) - \text{FalseBtsRsrp}_i \right]^2 \right)$$

p and A indicate the transmit power of the target false base station, d indicates a propagation distance between the target false base station and the user equipment, M indicates a quantity of user equipments that report the K pieces of measurement data, (a, b) indicates the location information of the target false base station, $(x_i, y_i)$ indicates location information of an $i^{th}$ user equipment, $\text{FalseBtsRsrp}_i$ indicates a quantization level value that is of the reference signal received power of the target false base station and that is measured by the $i^{th}$ user equipment, and $\frac{n}{2}$ and 10 * m indicate an attenuation factor. It may be understood that a value of m may be set to be greater than or equal to 4. In this way, the location information of the target false base station is positioned based on location information of the plurality of user equipments and the reference signal received power of the target false base station measured by the plurality of user equipments, so that accuracy of the location information of the target false base station can be improved. RSRP_predict indicates the predicted value, (x, y) indicates the location information of the user equipment, error indicates a difference between the level value and the predicted value, and FalseBtsRsrp indicates a quantization level value that is of the reference signal received power of the target false base station and that is measured by the user equipment.

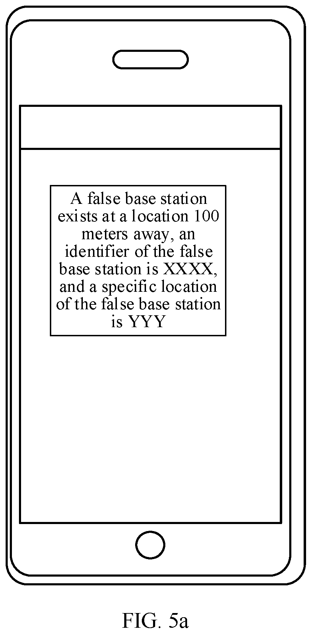

In this embodiment, the positioning apparatus may send the location information of the false base station to each user equipment, an operator network monitoring platform, or a law enforcement platform, so that the user equipment can avoid accessing the false base station, and the operator network monitoring platform and the law enforcement platform can accurately combat the false base station, in other words, only the false base station can be accurately combated. A specific presentation manner is not limited herein. The specific presentation manner may be shown in FIG. 5a to FIG. 5c.

As shown in FIG. 5a, the positioning apparatus directly sends a prompt to a user equipment within a coverage area of the positioning apparatus, where the prompt displays the location information of the false base station. Prompt information may be diversified. For example, as shown in FIG. 5a, the information is: "a false base station exists at a location 100 meters away, an identifier of the false base station is XXXX, and a specific location of the false base station is YYY". A distance between the user equipment and the false base station may even be specifically displayed on a map.

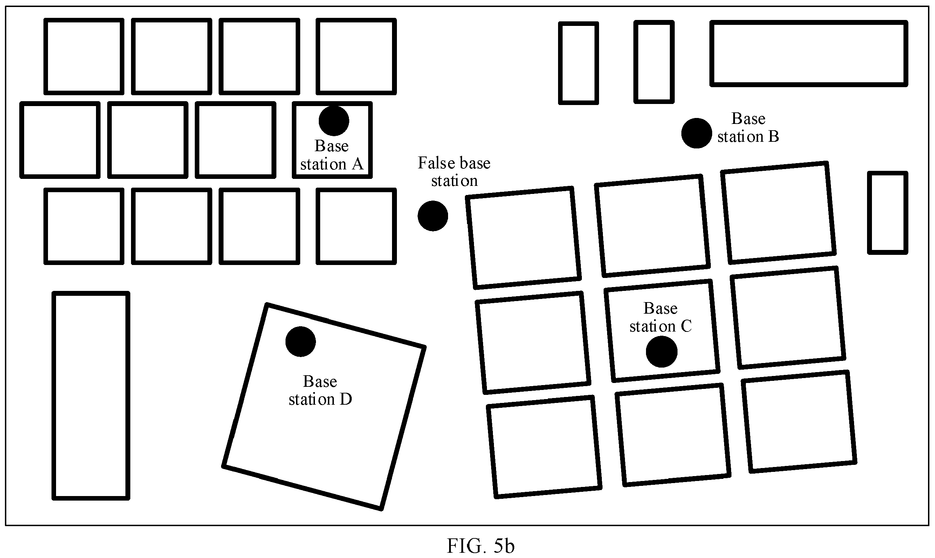

As shown in FIG. 5b, the positioning apparatus sends a prompt to the operator network monitoring platform, where the prompt displays the location information of the false base station. For example, as shown in FIG. 5b, locations of base stations to which an operator belongs and a location of the false base station are specifically displayed in a form of a map in prompt information. Alternatively, text information is directly sent, and the text information is marked as "a false base station exists at a location 100 meters southeast of a base station A, the false base station exists at a location 200 meters southwest of a base station B, an identifier of the false base station is XXXX, and a specific location of the false base station is YYY".

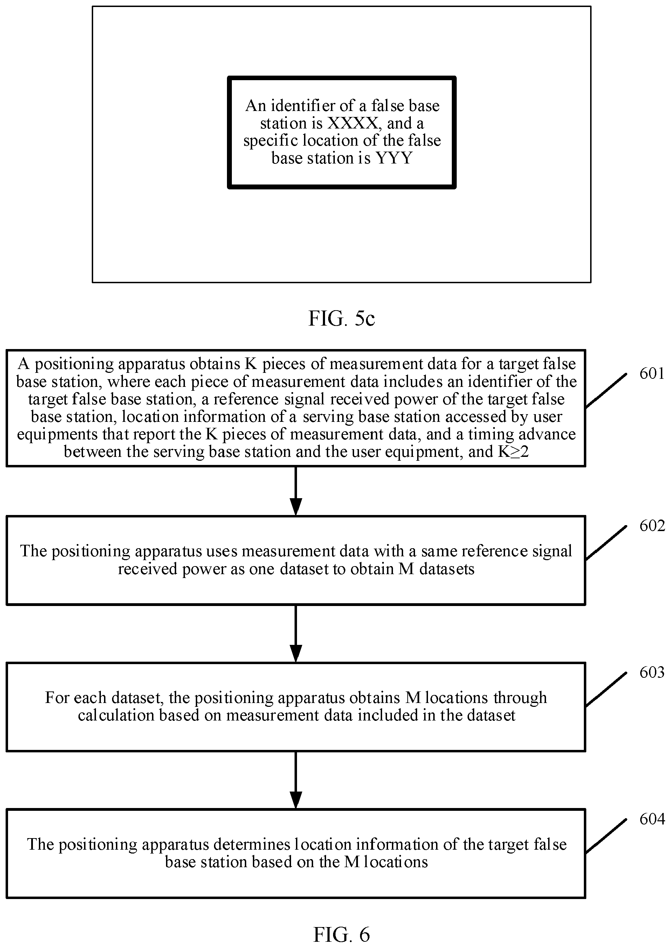

As shown in FIG. 5c, the positioning apparatus sends a prompt to the law enforcement platform, where the prompt displays the location information of the false base station. Prompt information may be diversified. For example, as shown in FIG. 5c, the information is: "an identifier of a false base station is XXXX, and a specific location of the false base station is YYY".

The following describes a false base station positioning method in embodiments of this application with reference to the figure. As shown in FIG. 6, an embodiment of the false base station positioning method in embodiments of this application includes the following steps.

601: A positioning apparatus obtains K pieces of measurement data for a target false base station, where each piece of measurement data includes an identifier of the target false base station, a reference signal received power of the target false base station, location information of a serving base station accessed by user equipments that report the K pieces of measurement data, and a timing advance between the serving base station and the user equipment, and K≥2.

In this embodiment, the positioning apparatus may receive a plurality of pieces of measurement data sent by a plurality of user equipments. The plurality of pieces of measurement data may indicate information about a plurality of false base stations. Therefore, when positioning one of the false base stations, the positioning apparatus may obtain the K pieces of measurement data for the target false base station from the plurality of pieces of measurement data. In an example solution, a specific result of each piece of measurement data in the measurement data obtained by the positioning apparatus may be shown in the foregoing Table 1. It may be understood that the measurement data may further include other information. Details are not described herein again.

The K pieces of measurement data may be summarized into a dataset based on the identifier of the target false base station. In an example solution, the dataset may be shown in Table 2.

**Table 2**

| False_Bts | SrvSiteID | False_Bts_Quantify_Rsrp | SrvCell_Ta_Dis_avg |
|---|---|---|---|
| 0-1-38950-500 | 102424 | -50 | 295.6299 |
| 0-1-38950-500 | 102424 | -60 | 245.217 |
| 0-1-38950-500 | 102424 | -70 | 223.6405 |
| 0-1-38950-500 | 102424 | -80 | 204.3101 |
| 0-1-38950-500 | 102424 | -90 | 193.0608 |
| 0-1-38950-500 | 102424 | -100 | 182.5093 |
| 0-1-38950-500 | 102424 | -110 | 166.2051 |
| 0-1-38950-500 | 102424 | -120 | 156.5698 |
| 0-1-38950-500 | 102424 | -130 | 160.1501 |
| 0-1-38950-500 | 111419 | -50 | 127.3029 |
| 0-1-38950-500 | 111419 | -60 | 145.4321 |
| 0-1-38950-500 | 111419 | -70 | 154.0737 |
| 0-1-38950-500 | 111419 | -80 | 170.216 |
| 0-1-38950-500 | 111419 | -90 | 195.3258 |
| 0-1-38950-500 | 111419 | -100 | 260.6099 |
| 0-1-38950-500 | 111419 | -110 | 318.9137 |
| 0-1-38950-500 | 111419 | -120 | 293.2531 |
| 0-1-38950-500 | 111419 | -130 | 329.7381 |
| 0-1-38950-500 | 111421 | -50 | 253.1939 |
| 0-1-38950-500 | 111421 | -60 | 241.7458 |
| 0-1-38950-500 | 111421 | -70 | 206.1066 |
| 0-1-38950-500 | 111421 | -80 | 192.2925 |
| 0-1-38950-500 | 111421 | -90 | 209.7328 |

(continued)

| False_Bts | SrvSiteID | False_Bts_Quantify_Rsrp | SrvCell_Ta_Dis_avg |
|---|---|---|---|
| 0-1-38950-500 | 111421 | -100 | 198.8695 |
| 0-1-38950-500 | 111421 | -110 | 201.1224 |
| 0-1-38950-500 | 111421 | -120 | 199.3746 |
| 0-1-38950-500 | 111421 | -130 | 216.9787 |

False_Bts indicates the identifier of the target false base station, and may be specifically "FalseBtsSiteID-FalseBtsCellID-FalseBtsFreq-FalseBtsPci". FalseBtsSiteID indicates a target false base station site ID, FalseBtsCellID indicates a target false base station cell ID, FalseBtsFreq indicates an operating frequency band of the target false base station, and FalseBtsPci indicates a physical cell identity of the target false base station. SrvSiteID indicates a site ID of the serving base station accessed by the user equipments that report the K pieces of measurement data, False_Bts_Quantify_Rsrp indicates a quantization level value of the target false base station, and SrvCell_Ta_Dis_avg indicates an average value of timing advances between a serving base station accessed by the user equipments that report the K pieces of measurement data and the user equipments, where a unit is meter.

In this embodiment, a specific operation in which the positioning apparatus obtains the quantization level value of the target false base station may be as follows: The positioning apparatus quantizes the reference signal received power of the target false base station in each piece of measurement data based on a first formula to obtain the quantization level, where the first formula is: False_Bts_Quantify_Rsrp =- 10 $*$ quantify_rsrp ; and $quantify_{rsrp}$ = int(- 1 $*$ FalseBtsRsrp/10). FalseBtsRsrp indicates a quantization level value that is of the reference signal received power of the target false base station and that is measured by the user equipment, $quantify_{rsrp}$ indicates a value obtained by rounding the level value, and False_Bts_Quantify_Rsrp indicates an output quantization level.

602: The positioning apparatus uses measurement data with a same reference signal received power as one dataset to obtain M datasets.

After obtaining the K pieces of measurement data based on the identifier of the target false base station, the positioning apparatus uses the measurement data with the same reference signal received power as one dataset. In an example solution, if the positioning apparatus quantizes the reference signal received power of the target false base station into the quantization level, measurement data with a same quantization level is summarized into one dataset. For example, if measurement data with a quantization level of -60 in the foregoing Table 2 is summarized into one dataset, a dataset shown in Table 3 is obtained.

**Table 3**

| False_Bts | SrvSiteID | False_Bts_Quantify_Rsrp | SrvCell_Ta_Dis_avg |
|---|---|---|---|
| 0-1-38950-500 | 102424 | -60 | 245.217 |
| 0-1-38950-500 | 111419 | -60 | 145.4321 |
| 0-1-38950-500 | 111421 | -60 | 241.7458 |

If measurement data with a quantization level of -70 in the foregoing Table 2 is summarized into one dataset, a dataset shown in Table 4 is obtained.

**Table 4**

| False_Bts | SrvSiteID | False_Bts_Quantify_Rsrp | SrvCell_Ta_Dis_avg |
|---|---|---|---|
| 0-1-38950-500 | 102424 | -70 | 223.6405 |
| 0-1-38950-500 | 111419 | -70 | 154.0737 |
| 0-1-38950-500 | 111421 | -70 | 206.1066 |

Based on this, M datasets corresponding to the target false base station are obtained.

603: For each dataset, the positioning apparatus obtains M locations through calculation based on measurement data included in the dataset.

In this embodiment, after obtaining the location information of the serving base station corresponding to the target false base station and delay information between the serving base station and the user equipment, the positioning apparatus may determine, by using a time difference positioning method or a least square positioning algorithm and based on the location information of the serving base station and the timing advance that are included in each dataset, a location that is of the target false base station and that corresponds to each dataset, to obtain the M locations corresponding to the M datasets. For example, one piece of location information corresponding to the target false base station is obtained for the dataset shown in Table 3, and one piece of location information corresponding to the target false base station is also obtained for the dataset shown in Table 4.

604: The positioning apparatus determines location information of the target false base station based on the M locations.

The positioning apparatus averages the M locations to obtain the location information of the target false base station.

In this embodiment, the positioning apparatus may send the location information of the false base station to each user equipment, an operator network monitoring platform, or a law enforcement platform, so that the user equipment can avoid accessing the false base station, and the operator network monitoring platform and the law enforcement platform can accurately combat the false base station, in other words, only the false base station can be accurately combated. A specific presentation manner is not limited herein. The specific presentation manner may be shown in FIG. 5a to FIG. 5c.

As shown in FIG. 5a, the positioning apparatus directly sends a prompt to a user equipment within a coverage area of the positioning apparatus, where the prompt displays the location information of the false base station. Prompt information may be diversified. For example, as shown in FIG. 5a, the information is: "a false base station exists at a location 100 meters away, an identifier of the false base station is XXXX, and a specific location of the false base station is YYY". A distance between the user equipment and the false base station may even be specifically displayed on a map.

As shown in FIG. 5b, the positioning apparatus sends a prompt to the operator network monitoring platform, where the prompt displays the location information of the false base station. For example, as shown in FIG. 5b, locations of base stations to which an operator belongs and a location of the false base station are specifically displayed in a form of a map in prompt information. Alternatively, text information is directly sent, and the text information is marked as "a false base station exists at a location 100 meters southeast of a base station A, the false base station exists at a location 200 meters southwest of a base station B, an identifier of the false base station is XXXX, and a specific location of the false base station is YYY".

As shown in FIG. 5c, the positioning apparatus sends a prompt to the law enforcement platform, where the prompt displays the location information of the false base station. Prompt information may be diversified. For example, as shown in FIG. 5c, the information is: "an identifier of a false base station is XXXX, and a specific location of the false base station is YYY".

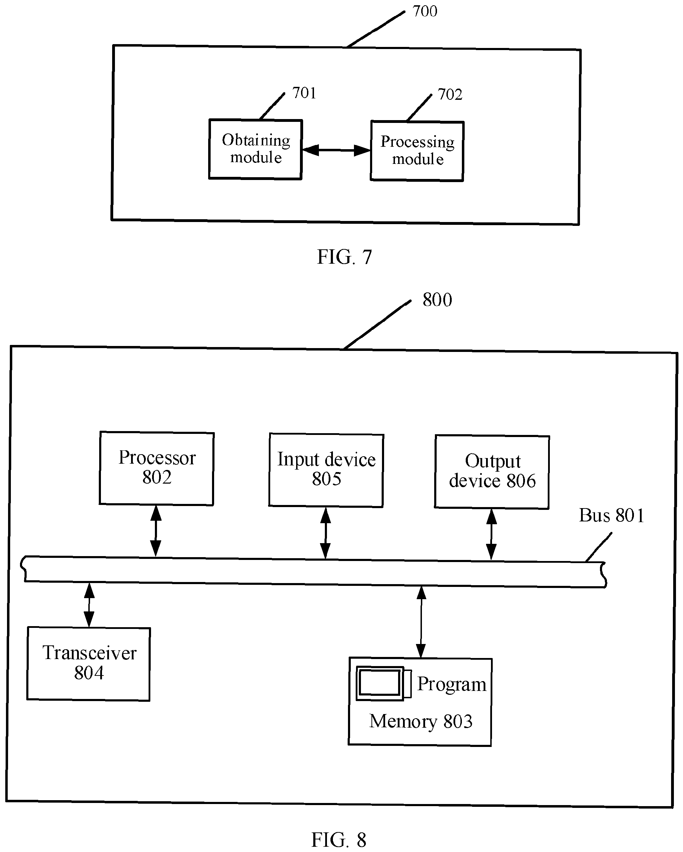

Specifically, refer to FIG. 7. A positioning apparatus 700 in an embodiment of this application includes an obtaining module 701 and a processing module 702. The obtaining module 701 and the processing module 702 are connected through a bus. The positioning apparatus 700 may be the positioning apparatus in the foregoing method embodiment, or may be configured as one or more chips in the positioning apparatus. The positioning apparatus 700 may be configured to perform some or all functions of the positioning apparatus in the foregoing method embodiment.

The obtaining module 701 is configured to obtain K pieces of measurement data for a target false base station and location information of user equipments that report the K pieces of measurement data, where each piece of measurement data includes an identifier of the target false base station and a reference signal received power of the target false base station, and $K \geq 2$.

The processing module 702 is configured to determine location information of the target false base station based on the location information of the user equipment and the reference signal received power of the target false base station.

Optionally, the processing module 702 is specifically configured to determine a location target optimization function of the target false base station based on a propagation model path loss formula, the location information of the user equipment, and the reference signal received power of the target false base station, to obtain the location information of the target false base station.

The propagation model path loss formula is: $pathLoss = p + 10 * m * \log(d)$.

The target optimization function is:

$$(a, b) = \arg \min_{(a,b)} \left( \frac{1}{2} * \sum_{i=1}^{M} \left[ A + \frac{n}{2} * \log((x_i - a)^2 + (y_i - b)^2)) - FalseBtsRsrp_i \right]^2 \right).$$

p and A indicate a transmit power of the target false base station, d indicates a propagation distance between the target false base station and the user equipment, M indicates a quantity of user equipments that report the K pieces of measurement data, (a, b) indicates the location information of the target false base station, $(x_i, y_i)$ indicates location information of an $i^{th}$ user equipment, FalseBtsRsrp$_i$ indicates a quantization level value that is of the reference signal received power of the target false base station and that is measured by the $i^{th}$ user equipment, and $\frac{n}{2}$ and $10 * m$ indicate an attenuation factor.

Optionally, the processing module 702 is specifically configured to: determine, based on the transmit power of the target false base station, a predicted value of a level value received by the user equipment;

obtain a residual function based on the level value measured by the user equipment and the predicted value; and perform least square-based processing on the residual function and the propagation model path loss formula to obtain the target optimization function.

A formula for calculating the predicted value is: $$\text{RSRP\_predict} = A + \frac{n}{2} * \log((x\text{-}a)^2 + (y\text{-}b)^2); \text{ and}$$

the residual function is: $$\text{error} = A + \frac{n}{2} * \log((x-a)^2 + (y-b)^2)) - \text{FalseBtsRsrp}$$

RSRP_predict indicates the predicted value, 2 indicates the attenuation factor, A indicates the transmit power of the target false base station, (x, y) indicates the location information of the user equipment, (a, b) indicates the location information of the target false base station, error indicates a difference between the level value and the predicted value, and FalseBtsRsrp indicates a quantization level value that is of the reference signal received power of the target false base station and that is measured by the user equipment.

Optionally, the location information of the user equipment is determined by using a minimization of drive tests positioning manner that is based on a global positioning system GPS; or the location information of the user equipment is determined by using a triangular positioning manner or a cell identity enhanced positioning manner.

Optionally, the positioning apparatus 700 further includes a storage module. The storage module is coupled to the processing module, so that the processing module can execute computer-executable instructions stored in the storage module, to implement a function of a terminal in the foregoing method embodiment. In an example, the storage module optionally included in the positioning apparatus 700 may be a storage unit in a chip, for example, a register or a cache. Alternatively, the storage module may be a storage unit located outside a chip, for example, a ROM, another type of static storage device that can store static information and instructions, or a RAM.

It should be understood that a procedure performed between the modules of the positioning apparatus in the embodiment corresponding to FIG. 7 is similar to a procedure performed by the positioning apparatus 700 in the method embodiment corresponding to FIG. 4, and details are not described herein again.

FIG. 8 is a diagram of a possible structure of a positioning apparatus 800 according to the foregoing embodiment. The positioning apparatus 800 may be configured as the foregoing positioning apparatus. The positioning apparatus 800 may include a processor 802, a computer-readable storage medium/memory 803, a transceiver 804, an input device 805, an output device 806, and a bus 801. The processor, the transceiver, the computer-readable storage medium, and the like are connected through the bus. A specific medium for connecting the foregoing components is not limited in this embodiment of this application.

In an example, the transceiver 804 obtains K pieces of measurement data for a target false base station and location information of user equipments that report the K pieces of measurement data, where each piece of measurement data includes an identifier of the target false base station and a reference signal received power of the target false base station, and K≥2.

The processor 802 determines location information of the target false base station based on the location information of the user equipment and the reference signal received power of the target false base station.

In an example, the processor 802 may include a baseband circuit. For example, the processor 802 may generate prompt information including location information of the target false base station. The transceiver 804 may include a radio frequency circuit, to perform processing such as modulation and amplification on the prompt information, and then send the prompt information to a user equipment or a serving base station.

In another example, the processor 802 may run an operating system to control a function between each device and each component. The transceiver 804 may include a baseband circuit and a radio frequency circuit. For example, the baseband circuit and the radio frequency circuit may process prompt information that includes location information of a target false base station, and then send processed prompt information to a user equipment or a serving base station.

The transceiver 804 and the processor 802 may implement corresponding steps in any embodiment in FIG. 4. Details are not described herein again.

It may be understood that FIG. 8 shows only a simplified design of the positioning apparatus. During actual application, the positioning apparatus may include any quantity of transceivers, processors, memories, and the like, and all positioning apparatuses that can implement this application fall within the protection scope of this application.

The processor 802 in the apparatus 800 may be a general-purpose processor, for example, a CPU, a network processor (network processor, NP), or a microprocessor, or may be an ASIC, or one or more integrated circuits configured to control program execution of the solutions of this application. Alternatively, the processor 802 may be a digital signal processor (digital signal processor, DSP), a field programmable gate array (field programmable gate array, FPGA) or another programmable logic device, a discrete gate or transistor logic device, or a discrete hardware component. Alternatively, a controller/processor may be a combination of processors implementing a computing function, for example, a combination of one or more microprocessors, or a combination of the DSP and the microprocessor. The processor usually performs logical and arithmetic operations based on program instructions stored in the memory.

The foregoing bus 801 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used for representing the bus in FIG. 8, but this does not mean that there is only one bus or only one type of bus.

The foregoing computer-readable storage medium/memory 803 may further store an operating system and another application program. Specifically, the program may include program code, and the program code includes computer operation instructions. More specifically, the foregoing memory may be a ROM, another type of static storage device that can store static information and instructions, a RAM, another type of dynamic storage device that can store information and instructions, a magnetic disk memory, or the like. The memory 803 may be a combination of the storage types. In addition, the computer-readable storage medium/memory may be located in the processor, or may be located outside the processor, or may be distributed on a plurality of entities including a processor and a processing circuit. The computer-readable storage medium/memory may be specifically embodied in a computer program product. For example, the computer program product may include a computer-readable medium included in an encapsulation material.

Alternatively, an embodiment of this application further provides a general-purpose processing system. For example, the general-purpose processing system is usually referred to as a chip. The general-purpose processing system includes one or more microprocessors that provide a processor function, and an external memory that provides at least a part of a storage medium. All these components are connected to another supporting circuit by using an external bus architecture. When instructions stored in a memory are executed by a processor, the processor is enabled to perform some or all of the steps of the positioning apparatus in the false base station positioning method in the embodiment in FIG. 4, and/or another process of the technology described in this application.

Method or algorithm steps described in combination with the content disclosed in this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM, or a storage medium in any other form well-known in the art. For example, the storage medium is coupled to the processor, so that the processor can read information from the storage medium and write the information into the storage medium. Certainly, the storage medium may alternatively be a component of the processor. The processor and the storage medium may be disposed in an ASIC. In addition, the ASIC may be located in a terminal. Certainly, the processor and the storage medium may alternatively exist in the positioning apparatus as discrete components.

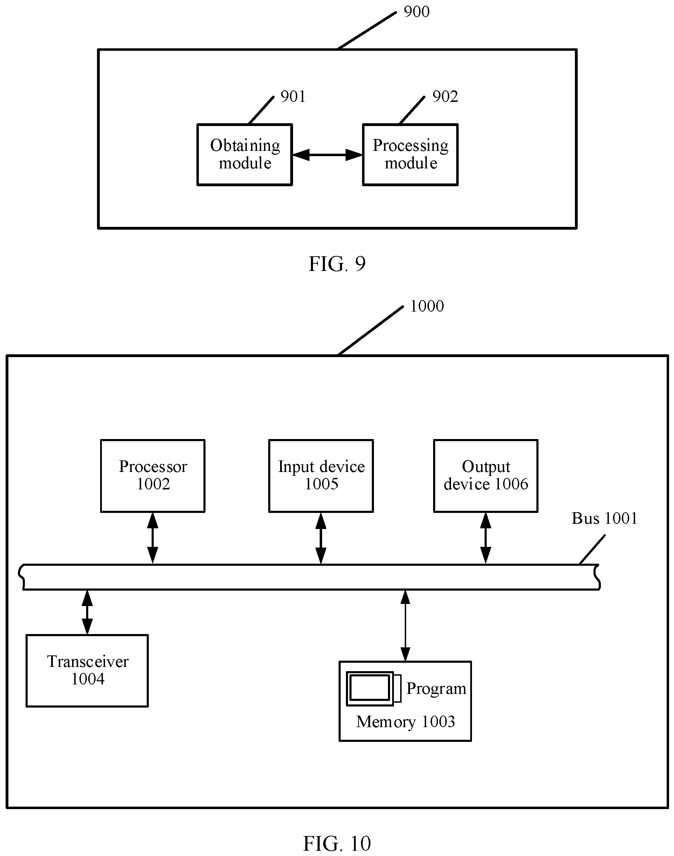

Specifically, refer to FIG. 9. A positioning apparatus 900 in an embodiment of this application includes an obtaining module 901 and a processing module 902. The obtaining module 901 and the processing module 902 are connected through a bus. The positioning apparatus 900 may be the positioning apparatus in the foregoing method embodiment, or may be configured as one or more chips in the positioning apparatus. The positioning apparatus 900 may be configured to perform some or all functions of the positioning apparatus in the foregoing method embodiment.

The obtaining module 901 is configured to obtain K pieces of measurement data for a target false base station, where each piece of measurement data includes an identifier of the target false base station, a reference signal received power of the target false base station, location information of a serving base station accessed by user equipments that report the K pieces of measurement data, and a timing advance between the serving base station and the user equipment, and K≥2.

The processing module 902 is configured to: use measurement data with a same reference signal received power as one dataset to obtain M datasets, where M is a positive integer; for each dataset, obtain M locations through calculation based on measurement data included in the dataset; and determine location information of the target false base station based on the M locations.

Optionally, the processing module 902 is specifically configured to: quantize the reference signal received power of the target false base station in each piece of measurement data to obtain a quantization level; and use measurement data with a same quantization level as one dataset to obtain the M datasets.

Optionally, the processing module 902 is specifically configured to quantize the reference signal received power of the target false base station in each piece of measurement data based on a first formula to obtain the quantization level.

The first formula is: False_Bts_Quantify_Rsrp =- 10 * quantify_rsrp; and

$$\text{quantify}_{rsrp} = \text{int}(-1 * FalseBtsRsrp/10).$$

FalseBtsRsrp indicates a quantization level value that is of the reference signal received power of the target false base station and that is measured by the user equipment, $\text{quantify}_{rsrp}$ indicates a value obtained by rounding the level value, and False_Bts_Quantify_Rsrp indicates an output quantization level.

Optionally, the processing module 902 is specifically configured to: for each dataset, determine, by using a time difference positioning method or a least square positioning algorithm and based on the location information of the serving base station and the timing advance that are included in the dataset, a location that is of the target false base station and that corresponds to each dataset, to obtain the M locations corresponding to the M datasets.

Optionally, the processing module 902 is specifically configured to average the M locations to obtain the location information of the target false base station.

Optionally, the positioning apparatus 900 further includes a storage module. The storage module is coupled to the processing module, so that the processing module can execute computer-executable instructions stored in the storage module, to implement a function of a terminal in the foregoing method embodiment. In an example, the storage module optionally included in the positioning apparatus 900 may be a storage unit in a chip, for example, a register or a cache. Alternatively, the storage module may be a storage unit located outside a chip, for example, a ROM, another type of static storage device that can store static information and instructions, or a RAM.

It should be understood that a procedure performed between the modules of the positioning apparatus in the embodiment corresponding to FIG. 9 is similar to a procedure performed by the positioning apparatus 900 in the method embodiment corresponding to FIG. 6, and details are not described herein again.

FIG. 10 is a diagram of a possible structure of a positioning apparatus 1000 according to the foregoing embodiment. The positioning apparatus 1000 may be configured as the foregoing positioning apparatus. The positioning apparatus 1000 may include a processor 1002, a computer-readable storage medium/memory 1003, a transceiver 1004, an input device 1005, an output device 1006, and a bus 1001. The processor, the transceiver, the computer-readable storage medium, and the like are connected through the bus. A specific medium for connecting the foregoing components is not limited in this embodiment of this application.

In an example, the transceiver 1004 obtains K pieces of measurement data for a target false base station, where each piece of measurement data includes an identifier of the target false base station, a reference signal received power of the target false base station, location information of a serving base station accessed by user equipments that report the K pieces of measurement data, and a timing advance between the serving base station and the user equipment, and K≥2.

The processor 1002 uses measurement data with a same reference signal received power as one dataset to obtain M datasets, where M is a positive integer; for each dataset, obtains M locations through calculation based on measurement data included in the dataset; and determines location information of the target false base station based on the M locations.

In an example, the processor 1002 may include a baseband circuit. For example, the processor 1002 may generate prompt information including location information of the target false base station. The transceiver 1004 may include a radio frequency circuit, to perform processing such as modulation and amplification on the prompt information, and then send the prompt information to a user equipment or a serving base station.

In another example, the processor 1002 may run an operating system to control a function between each device and each component. The transceiver 1004 may include a baseband circuit and a radio frequency circuit. For example, the baseband circuit and the radio frequency circuit may process prompt information that includes location information of a target false base station, and then send processed prompt information to a user equipment or a serving base station.

The transceiver 1004 and the processor 1002 may implement corresponding steps in any embodiment in FIG. 4. Details are not described herein again.

It may be understood that FIG. 10 shows only a simplified design of the positioning apparatus. During actual application, the positioning apparatus may include any quantity of transceivers, processors, memories, and the like, and all positioning apparatuses that can implement this application fall within the protection scope of this application.

The processor 1002 in the apparatus 1000 may be a general-purpose processor, for example, a CPU, a network processor (network processor, NP), or a microprocessor, or may be an ASIC, or one or more integrated circuits configured to control program execution of the solutions of this application. Alternatively, the processor 1002 may be a digital signal processor (digital signal processor, DSP), a field programmable gate array (field programmable gate array, FPGA) or another programmable logic device, a discrete gate or transistor logic device, or a discrete hardware component. Alternatively, a controller/processor may be a combination of processors implementing a computing function, for example, a combination of one or more microprocessors, or a combination of the DSP and the microprocessor. The processor usually performs logical and arithmetic operations based on program instructions stored in the memory.

The foregoing bus 1001 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used for representing the bus in FIG. 8, but this does not mean that there is only one bus or only one type of bus.

The foregoing computer-readable storage medium/memory 1003 may further store an operating system and another application program. Specifically, the program may include program code, and the program code includes computer operation instructions. More specifically, the foregoing memory may be a ROM, another type of static storage device that can store static information and instructions, a RAM, another type of dynamic storage device that can store information and instructions, a magnetic disk memory, or the like. The memory 1003 may be a combination of the storage types. In addition, the computer-readable storage medium/memory may be located in the processor, or may be located outside the processor, or may be distributed on a plurality of entities including a processor and a processing circuit. The computer-readable storage medium/memory may be specifically embodied in a computer program product. For example, the computer program product may include a computer-readable medium included in an encapsulation material.

Alternatively, an embodiment of this application further provides a general-purpose processing system. For example, the general-purpose processing system is usually referred to as a chip. The general-purpose processing system includes one or more microprocessors that provide a processor function, and an external memory that provides at least a part of a storage medium. All these components are connected to another supporting circuit by using an external bus architecture. When instructions stored in a memory are executed by a processor, the processor is enabled to perform some or all of the steps of the positioning apparatus in the false base station positioning method in the embodiment in FIG. 4, and/or another process of the technology described in this application.

Method or algorithm steps described in combination with the content disclosed in this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM, or a storage medium in any other form well-known in the art. For example, the storage medium is coupled to the processor, so that the processor can read information from the storage medium and write the information into the storage medium. Certainly, the storage medium may alternatively be a component of the processor. The processor and the storage medium may be disposed in an ASIC. In addition, the ASIC may be located in a terminal. Certainly, the processor and the storage medium may alternatively exist in the positioning apparatus as discrete components.

It may be clearly understood by a person skilled in the art that, for the purpose of convenient and brief description, for a detailed operating process of the foregoing system, apparatus, and unit, refer to a corresponding process in the foregoing method embodiment, and details are not described herein again.

In several embodiments provided in this application, it should be understood that the disclosed system, apparatus, and method may be implemented in another manner. For example, the described apparatus embodiment is merely an example. For example, division into the units is merely logical function division and there may be another division manner during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electrical, mechanical, or other forms.

The units described as separate components may or may not be physically separate, and components displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

**Claims**

1. A false base station positioning method, comprising:

    obtaining K pieces of measurement data for a target false base station and location information of user equipments that report the K pieces of measurement data, wherein each piece of measurement data comprises an identifier of the target false base station and a reference signal received power of the target false base station, and K≥2; and
    determining location information of the target false base station based on the location information of the user equipment and the reference signal received power of the target false base station.

2. The method according to claim 1, wherein the determining location information of the target false base station based on the location information of the user equipment and the reference signal received power of the target false base station comprises:

    determining a location target optimization function of the target false base station based on a propagation model path loss formula, the location information of the user equipment, and the reference signal received power of the target false base station, to obtain the location information of the target false base station, wherein
    the propagation model path loss formula is: pathLoss = p + 10 * m * log(d); and
    the target optimization function is:

$$(a, b) = \arg\min_{(a,b)} \left( \frac{1}{2} * \sum_{i=1}^{M} \left[ A + \frac{n}{2} * \log((x_i - a)^2 + (y_i - b)^2)) - \text{FalseBtsRsrp}_i \right]^2 \right),$$

    wherein
    p and A indicate a transmit power of the target false base station, d indicates a propagation distance between the target false base station and the user equipment, M indicates a quantity of user equipments that report the K pieces of measurement data, (a, b) indicates the location information of the target false base station, $(x_i, y_i)$ indicates location information of an $i^{th}$ user equipment, $\text{FalseBtsRsrp}_i$ indicates a quantization level value that is of the reference signal received power of the target false base station and that is measured by the $i^{th}$ user equipment, and $\frac{n}{2}$ and $10 * m$ indicate an attenuation factor. 2

3. The method according to claim 2, wherein the determining a location target optimization function of the target false base station based on a propagation model path loss formula, the location information of the user equipment, and the reference signal received power of the target false base station comprises:

    determining a predicted value of the quantization level value based on the transmit power of the target false base station;
    obtaining a residual function based on the quantization level value measured by the user equipment and the predicted value; and
    performing least square-based processing on the residual function and the propagation model path loss formula to obtain the target optimization function, wherein
    a formula for calculating the predicted value is: $\text{RSRP\_predict} = A + \frac{n}{2} * \log((x - a)^2 + (y - b)^2)$; and
    the residual function is: $\text{error} = A + \frac{n}{2} * \log((x - a)^2 + (y - b)^2)) - \text{FalseBtsRsrp}$, wherein
    RSRP_predict indicates the predicted value, $\frac{n}{2}$ indicates the attenuation factor, A indicates the transmit power of the target false base station, (x, y) indicates the location information of the user equipment, (a, b) indicates the location information of the target false base station, error indicates a difference between the level value and the predicted value, and FalseBtsRsrp indicates a quantization level value that is of the reference signal received power of the target false base station and that is measured by the user equipment.

**4.** The method according to any one of claims 1 to 3, wherein the location information of the user equipment is determined by using a minimization of drive tests positioning manner that is based on a global positioning system GPS; or the location information of the user equipment is determined by using a triangular positioning manner or a cell identity enhanced positioning manner.

**5.** A false base station positioning method, comprising:

obtaining K pieces of measurement data for a target false base station, wherein each piece of measurement data comprises an identifier of the target false base station, a reference signal received power of the target false base station, location information of a serving base station accessed by user equipments that report the K pieces of measurement data, and a timing advance between the serving base station and the user equipment, and K≥2;

using measurement data with a same reference signal received power as one dataset to obtain M datasets, wherein M is a positive integer;

for each dataset, obtaining M locations through calculation based on measurement data comprised in the dataset; and

determining location information of the target false base station based on the M locations.

**6.** The method according to claim 5, wherein the using measurement data with a same reference signal received power as one dataset comprises:

quantizing the reference signal received power of the target false base station in each piece of measurement data to obtain a quantization level; and

using measurement data with a same quantization level as one dataset to obtain the M datasets.

**7.** The method according to claim 6, wherein the quantizing the reference signal received power of the target false base station in each piece of measurement data to obtain a quantization level comprises:

quantizing the reference signal received power of the target false base station in each piece of measurement data based on a first formula to obtain the quantization level, wherein
the first formula is: False_Bts_Quantify_Rsrp =- 10 $*$ quantify_rsrp; and

$$\text{quantify}_{rsrp} = \text{int}(-1 * \text{FalseBtsRsrp}/10),$$

wherein

FalseBtsRsrp indicates a quantization level value that is of the reference signal received power of the target false base station and that is measured by the user equipment, $\text{quantify}_{rsrp}$ indicates a value obtained by rounding the level value, and False_Bts_Quantify_Rsrp indicates an output quantization level.

**8.** The method according to any one of claims 5 to 7, wherein the obtaining M locations through calculation based on measurement data comprised in the dataset comprises:

for each dataset, determining, by using a time difference positioning method or a least square positioning algorithm and based on the location information of the serving base station and the timing advance that are comprised in the dataset, a location that is of the target false base station and that corresponds to each dataset, to obtain the M locations corresponding to the M datasets.

**9.** The method according to any one of claims 5 to 8, wherein the determining location information of the target false base station based on the M locations comprises:
averaging the M locations to obtain the location information of the target false base station.

**10.** A false base station positioning apparatus, comprising:

an obtaining module, configured to obtain K pieces of measurement data for a target false base station and location information of user equipments that report the K pieces of measurement data, wherein each piece of measurement data comprises an identifier of the target false base station and a reference signal received power of the target false base station, and K≥2; and

a processing module, configured to determine location information of the target false base station based on the location information of the user equipment and the reference signal received power of the target false base station.

11. The apparatus according to claim 10, wherein the processing module is specifically configured to determine a location target optimization function of the target false base station based on a propagation model path loss formula, the location information of the user equipment, and the reference signal received power of the target false base station, to obtain the location information of the target false base station, wherein

the propagation model path loss formula is: pathLoss = p + 10 $_*$ m $_*$ log(d); and
the target optimization function is:

$$(a, b) = \arg\min_{(a,b)} \left( \frac{1}{2} * \sum_{i=1}^{M} \left[ A + \frac{n}{2} * \log((x_i - a)^2 + (y_i - b)^2)) - FalseBtsRsrp_i \right]^2 \right),$$

wherein
p and A indicate a transmit power of the target false base station, d indicates a propagation distance between the target false base station and the user equipment, M indicates a quantity of user equipments that report the K pieces of measurement data, (a, b) indicates the location information of the target false base station, $(x_i, y_i)$ indicates location information of an $i^{th}$ user equipment, $FalseBtsRsrp_i$ indicates a quantization level value that is of the reference signal received power of the target false base station and that is measured by the $i^{th}$ user equipment, and $\frac{n}{2}$ and 10 $_*$ m indicate an attenuation factor.

12. The apparatus according to claim 11, wherein the processing module is specifically configured to: determine, based on the transmit power of the target false base station, a predicted value of a level value received by the user equipment;

obtain a residual function based on the level value measured by the user equipment and the predicted value; and perform least square-based processing on the residual function and the propagation model path loss formula to obtain the target optimization function, wherein

a formula for calculating the predicted value is: $RSRP\_predict = A + \frac{n}{2} * \log((x - a)^2 + (y - b)^2)$; and

the residual function is: $error = A + \frac{n}{2} * \log((x - a)^2 + (y - b)^2)) - FalseBtsRsrp$, wherein

RSRP_predict indicates the predicted value, 2 indicates the attenuation factor, A indicates the transmit power of the target false base station, (x, y) indicates the location information of the user equipment, (a, b) indicates the location information of the target false base station, error indicates a difference between the level value and the predicted value, and FalseBtsRsrp indicates a quantization level value that is of the reference signal received power of the target false base station and that is measured by the user equipment.

13. The apparatus according to any one of claims 10 to 12, wherein the location information of the user equipment is determined by using a minimization of drive tests positioning manner that is based on a global positioning system GPS; or the location information of the user equipment is determined by using a triangular positioning manner or a cell identity enhanced positioning manner.

14. A false base station positioning apparatus, comprising:

an obtaining module, configured to obtain K pieces of measurement data for a target false base station, wherein each piece of measurement data comprises an identifier of the target false base station, a reference signal received power of the target false base station, location information of a serving base station accessed by user equipments that report the K pieces of measurement data, and a timing advance between the serving base station and the user equipment, and K≥2; and
a processing module, configured to: use measurement data with a same reference signal received power as one dataset to obtain M datasets, wherein M is a positive integer; for each dataset, obtain M locations through calculation based on measurement data comprised in the dataset; and determine location information of the target false base station based on the M locations.

15. The apparatus according to claim 14, wherein the processing module is specifically configured to: quantize the reference signal received power of the target false base station in each piece of measurement data to obtain a quantization level; and
use measurement data with a same quantization level as one dataset to obtain the M datasets.

16. The apparatus according to claim 15, wherein the processing module is specifically configured to quantize the reference signal received power of the target false base station in each piece of measurement data based on a first formula to obtain the quantization level, wherein

the first formula is: False_Bts_Quantify_Rsrp =- 10 * quantify_rsrp; and

$$\text{quantify}_{rsrp} = int(-1 * FalseBtsRsrp/10),$$

wherein
FalseBtsRsrp indicates a quantization level value that is of the reference signal received power of the target false base station and that is measured by the user equipment, $\text{quantify}_{rsrp}$ indicates a value obtained by rounding the level value, and False_Bts_Quantify_Rsrp indicates an output quantization level.

17. The apparatus according to any one of claims 14 to 16, wherein the processing module is specifically configured to: for each dataset, determine, by using a time difference positioning method or a least square positioning algorithm and based on the location information of the serving base station and the timing advance that are comprised in the dataset, a location that is of the target false base station and that corresponds to each dataset, to obtain the M locations corresponding to the M datasets.

18. The apparatus according to any one of claims 14 to 17, wherein the processing module is specifically configured to average the M locations to obtain the location information of the target false base station.

19. A false base station positioning apparatus, comprising at least one processor and a memory, wherein the memory is configured to store a program, and the processor invokes the program in the memory to perform the method according to any one of claims 1 to 4 or claims 5 to 9.

20. A computer program, wherein when the computer program is run on a computer, the computer is enabled to perform the method according to any one of claims 1 to 4 or claims 5 to 9.

21. A computer-readable storage medium, storing a program, wherein when the program is run on a computer, the computer is enabled to perform the method according to any one of claims 1 to 4 or claims 5 to 9.

22. A false base station positioning system, wherein the false base station positioning system comprises the false base station positioning apparatus, the user equipment, and the serving base station according to any one of claims 10 to 13 or claims 14 to 18.

FIG. 1

Monitoring
display apparatus

Location
information
of the false
base station

Location
information
of the false
base station

Location
information
of the false
base station

Measurement
information

Positioning
apparatus

Measurement
information

Serving base
station 2

False base
station

Serving base
station 1

Measurement
instruction

Measurement
information

Measurement
information

Measurement
information

Measurement
information

Measurement
instruction

User
equipment 1

Measurement
information

User
equipment 2

FIG. 2

MR reported by a UE

Engineering parameter

False base station detection

Extraction of MR information of a false base station

False base station positioning

Presentation of a false base station location

FIG. 3

A positioning apparatus obtains K pieces of measurement data for a target false base station and location information of user equipments that report the K pieces of measurement data, where each piece of measurement data includes an identifier of the target false base station and a reference signal received power of the target false base station, and $K \geq 2$

401

The positioning apparatus determines location information of the target false base station based on the location information of the user equipment and the reference signal received power of the target false base station

402

FIG. 4

A false base station exists at a location 100 meters away, an identifier of the false base station is XXXX, and a specific location of the false base station is YYY

FIG. 5a

FIG. 5b

An identifier of a false base
station is XXXX, and a
specific location of the false
base station is YYY

FIG. 5c

A positioning apparatus obtains K pieces of measurement data for a target false
base station, where each piece of measurement data includes an identifier of the
target false base station, a reference signal received power of the target false
base station, location information of a serving base station accessed by user
equipments that report the K pieces of measurement data, and a timing advance
between the serving base station and the user equipment, and $K \geq 2$                     601

The positioning apparatus uses measurement data with a same reference signal
received power as one dataset to obtain M datasets                                           602

For each dataset, the positioning apparatus obtains M locations through
calculation based on measurement data included in the dataset                                603

The positioning apparatus determines location information of the target false
base station based on the M locations                                                        604

FIG. 6

700

701
Obtaining module

702
Processing module

FIG. 7

800

Processor 802

Input device 805

Output device 806

Bus 801

Transceiver 804

Program

Memory 803

FIG. 8

900

Obtaining module 901

Processing module 902

FIG. 9

1000

Processor 1002

Input device 1005

Output device 1006

Bus 1001

Transceiver 1004

Program

Memory 1003

FIG. 10

## INTERNATIONAL SEARCH REPORT

| International application No. |
| --- |
| **PCT/CN2023/077573** |

**A. CLASSIFICATION OF SUBJECT MATTER**

H04W12/12(2021.01)i;H04W64/00(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, IEEE, CNKI: 伪基站, 位置, 定位, 功率, 强度, 测量, 多个, 参考信号接收功率, Fake base station, position, power, strength, measurement, multiple, reference signal received power, RSRP

**C. DOCUMENTS CONSIDERED TO BE RELEVANT**

| Category* | Citation of document, with indication, where appropriate, of the relevant passages | Relevant to claim No. |
| --- | --- | --- |
| X | CN 109302706 A (RESEARCH INSTITUTE OF CHINA MOBILE COMMUNICATIONS CORP. et al.) 01 February 2019 (2019-02-01) description, paragraphs [0040]-[0134] | 1-4, 10-13, 19-22 |
| Y | CN 109302706 A (RESEARCH INSTITUTE OF CHINA MOBILE COMMUNICATIONS CORP. et al.) 01 February 2019 (2019-02-01) description, paragraphs [0040]-[0134] | 5-9, 14-18 |
| Y | CN 115103442 A (CHINA TELECOM CORP., LTD.) 23 September 2022 (2022-09-23) description, paragraphs [0080]-[0103] | 5-9, 14-18 |
| X | CN 105992210 A (CHINA MOBILE COMMUNICATIONS GROUP HUBEI CO., LTD.) 05 October 2016 (2016-10-05) description, paragraphs [0046]-[0182] | 1-4, 10-13, 19-22 |
| Y | CN 105992210 A (CHINA MOBILE COMMUNICATIONS GROUP HUBEI CO., LTD.) 05 October 2016 (2016-10-05) description, paragraphs [0046]-[0182] | 5-9, 14-18 |
| A | CN 113645625 A (CHINA TELECOM CORP., LTD.) 12 November 2021 (2021-11-12) entire document | 1-22 |

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **08 May 2023** | **22 May 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/077573** |

**C.      DOCUMENTS CONSIDERED TO BE RELEVANT**

| Category* | Citation of document, with indication, where appropriate, of the relevant passages | Relevant to claim No. |
| --- | --- | --- |
| A | US 2020178322 A1 (OCTASIC INC.) 04 June 2020 (2020-06-04) entire document | 1-22 |

Form PCT/ISA/210 (second sheet) (July 2022)

**INTERNATIONAL SEARCH REPORT**
Information on patent family members

International application No.

**PCT/CN2023/077573**

| Patent document cited in search report | | | Publication date (day/month/year) | Patent family member(s) | | | Publication date (day/month/year) |
|---|---|---|---|---|---|---|---|
| CN | 109302706 | A | 01 February 2019 | CN | 109302706 | B | 19 November 2021 |
| CN | 115103442 | A | 23 September 2022 | None | | | |
| CN | 105992210 | A | 05 October 2016 | CN | 105992210 | B | 28 June 2019 |
| CN | 113645625 | A | 12 November 2021 | None | | | |
| US | 2020178322 | A1 | 04 June 2020 | US | 10805969 | B2 | 13 October 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210232230